# EUROPEAN PATENT APPLICATION

(11) **EP 0 852 994 A1**
(43) Date of publication of application: **15.07.1998**
(21) Application number: 98300191.8
(22) Date of filing: 13.01.1998
(51) Int. Cl.: B29C 44/10, C08J 9/12, C08J 9/14

(54) **Process for foaming synthetic resins**

(30) Priority: 14.01.1997 JP 4708/97; 20.05.1997 JP 129900/97
(71) Applicant: TSUTSUNAKA PLASTIC INDUSTRY CO., LTD., Osaka-shi, Osaka 541 (JP)
(72) Inventor: Kluit, Pieter Willem Provo, 2512 CB The Hague (NL); Hashimoto, Soichiro, Kanumashi, Tochigi (JP); Beukers, Adriaan, 2106 EG Heemstede (NL); Sakayama, Kazuhisa, Utsunomiyashi, Tichigi (JP)
(74) Representative: Thomson, Paul Anthony

(57) **Abstract**

A main object of the present invention is to provide a process for easily preparing foamed synthetic resin moldings having sufficient mechanical strengths such as rigidity without causing problems of toxicity and safety.

The process for preparing a foamed synthetic resin molding comprises bringing a mixed solution composed of water and/or an alcohol having two or less carbon atoms and a specified organic solvent into contact with a thermoplastic resin molding to swell the molding, heating the swollen thermoplastic resin molding alone or as a laminate of a plurality thereof under pressure, and foaming the molding.

## Description

### BACKGROUND OF THE INVENTION

### 1. Field of the Invention

The present invention relates to a process for preparing foamed synthetic resin moldings.

### 2. Related Art

As a conventional process for preparing foamed synthetic resin moldings, for example, a process which comprises impregnating a thermoplastic resin molding such as a polycarbonate molding with an organic solvent, enclosing the molding in a mold, heating the mold to the melting point of the molding or higher under pressure, then cooling it to a temperature in the range of the glass transition temperature of the molding to the melting point thereof, and then releasing the pressure from the mold to foam is known as disclosed in Japanese Patent Publication No. 63-4502.

However, the above-described conventional process has a problem that since a thermoplastic resin molding is impregnated with an organic solvent at high temperature (170°C, for example) and under high pressure, the extent of swelling becomes so great as to excessively foam the synthetic resin molding heated under pressure, thereby lowering the mechanical strengths of the foamed molding and also making the molding brittle. Further, this conventional process has another problem that an organic solvent makes the working atmosphere toxic. In addition, when the step of feeding the molding into a pressure vessel containing an organic solvent and heating the molding is employed, there arise problems that the working safety is not high and that the cost is high and the production efficiency is low, because of the necessity for special apparatus.

### SUMMARY OF THE INVENTION

The present invention has been developed after investigations made for the purpose of solving the conventional problems as described above. Therefore, a principal object of the present invention is to provide a process for preparing foamed synthetic resin moldings which sufficiently keep its mechanical strengths such as rigidity without causing the problems of toxicity and safety.

The following processes are employed in the present invention for attaining the above-described objects.

A first process is a process for preparing a foamed synthetic resin molding, comprising a first step of bringing a mixed solution composed of water (a first component) or an alcohol having two or less carbon atoms (a second component) and an organic solvent having a boiling point of 50 to 150°C (a third component) into contact with a thermoplastic resin molding under the conditions of ordinary temperature and atmospheric pressure to swell the thermoplastic resin molding; and a second step of heating the thermoplastic resin molding swollen in said first step alone or as a laminate of a plurality thereof to a temperature in the range of the heat distortion temperature thereof to the melting point thereof under pressure and then foaming the thermoplastic resin molding while gradually reducing the pressure.

A second process is a process for preparing a foamed synthetic resin molding; comprising a first step of bringing a mixed solution composed of water (a first component), an alcohol having two or less carbon atoms (a second component) and an organic solvent having a boiling point of 50 to 150°C (a third component) into contact with a thermoplastic resin molding under the conditions of ordinary temperature and atmospheric pressure to swell the thermoplastic resin molding; and a second step of heating the thermoplastic resin molding swollen in said first step alone or as a laminate of a plurality thereof to a temperature in the range of the heat distortion temperature thereof to the melting point thereof under pressure and then foaming the thermoplastic resin molding while gradually reducing the pressure.

A third process is a process for preparing a foamed synthetic resin molding; comprising steps of, laminating the thermoplastic resin molding swollen in said first step in the above-described first or second process and another unswollen molding, heating the resultant laminate to a temperature in the range of the heat distortion temperature thereof to the melting point thereof under pressure and then foaming the thermoplastic resin molding while gradually reducing the pressure.

The present invention has effects that the foamed synthetic resin molding can be easily and safely obtained and that the obtained foamed synthetic resin molding keeps mechanical strengths nearly equal to the inherent mechanical strengths of the thermoplastic resin molding because the thermoplastic resin molding is brought into contact with a mixed solution composed of water and/or an alcohol having two or less carbon atoms and a specified organic solvent to swell the molding, then the thermoplastic resin molding alone or as a laminate of a plurality thereof with another molding are heated under pressure, and the thermoplastic resin molding are foamed as described above.

The thermoplastic resin molding can be suitably selected from moldings prepared from a thermoplastic resin selected from among, for example, polyvinyl chloride, polypropylene, polystyrene, polycarbonate, polyether imide, polyamide, polymethyl methacrylate, polyether sulfone, polyether ether ketone, ABS, polyethylene terephthalate, polybutylene terephthalate and a mixture of two or more of them.

The unswollen molding used in the third process in the present invention can be selected from among thermoplastic resins applicable to thermoplastic resin moldings to be swollen and other thermoplastic resins which are compatible therewith or which can be laminated therewith through an adhesive layer.

The thermoplastic resin moldings can be prepared by ordinary, known molding processes such as extrusion molding, compression molding and injection molding. The thermoplastic resin moldings have configurations suitable for those of the intended foamed synthetic resin moldings, and are usually in the form of a sheet. When the sheet is excessively thin, the handling thereof is difficult and, on the contrary, when it is excessively thick, swelling time becomes longer and uniformly foamed state cannot be realized. Therefore, the thickness is preferably about 0.05 to 1.0 mm.

The organic solvents usable for forming the mixed solution for swelling the thermoplastic resin molding in the present invention are ones having boiling points in the range of 50 to 150°C, because when the boiling point of an organic solvent is below 50°C, the solvent volatilizes off wastefully and, therefore, the solvent does not contribute to the swelling of the thermoplastic resin moldings. On the contrary, when it is 150°C or above, the solvent remains in the resultant foamed synthetic resin molding unfavorably. Therefore, the organic solvent to be used in the present invention is preferably selected from among methyl acetate, ethyl acetate, butyl acetate, acetone, methyl ethyl ketone, trichloromethane, tetrahydrofurane, or mixtures of two or more of them.

The proportion of each component in the mixed solution is as follows.

In the first process, the volume ratio (volume %) of water (a first component) or the alcohol having two or less carbon atoms (a second component) : the organic solvent (a third component) is 60 to 85 : 15 to 40. When the relative volume of the organic solvent (a third component) exceeds 40, the thermoplastic resin molding is excessively swollen to cause excessive foaming in the second step and, on the contrary, when it is below 15, the thermoplastic resin molding is not sufficiently swollen and makes sufficient foaming impossible in the second step. Thus, the volume ratio should be carefully determined. When the combination of the alcohol (a second component) with the organic solvent (a third component) is used, care should be taken of the toxicity of the alcohol itself in view of the process safety.

As for the volume ratio in said second process, water (a first component) : the alcohol having two or less carbon atoms (a second component) : the organic solvent (a third component) is 20 to 60 : 15 to 50 : 15 to 40. When the relative volume of the organic solvent (a third component) exceeds 40, the thermoplastic resin molding is excessively swollen to cause excessive foaming in the second step and, on the contrary, when it is below 15, the thermoplastic resin molding is not sufficiently swollen and makes sufficient foaming impossible in the second step. Thus, the volume ratio should be carefully determined. The alcohol (a second component) has an effect of accelerating the compatibilization of water (a first component) with the organic solvent (a third component) to form a homogeneous solution. The alcohol is suitably added depending on the mixing ratio of water (a first component) to the organic solvent (a third component). When the relative volume of the alcohol (a second component) is below 15, the effect of accelerating the compatibilization is insufficient and, on the contrary, when it exceeds 50, the relative volume of water is reduced to relatively increase the toxicity of the alcohol. It is thus desired that care should be taken of the toxicity of the alcohol itself in view of the process safety.

In said third process, the molding to be laminated on at least one of both surfaces of the thermoplastic resin molding swollen in the first step in the above-described first or second process is an unswollen molding prepared from the same thermoplastic resin as that of the above-described swollen molding or another thermoplastic resin compatible therewith, which is usually in the form of a plate. In this process, the thermoplastic resin molding is laminated with the other molding through an adhesive layer or without using any adhesive layer. As for the order of the lamination of these moldings, it is also possible to laminate two or more layers of the two kinds of the moldings alternately. The swollen thermoplastic resin molding to be used here is that obtained in the first step in the above-described first or second process.

In an embodiment of the third process, an adhesive layer between the thermoplastic resin molding and another molding is unnecessary when the materials of both moldings are the same or when they are compatible with each other. When they are different from each other or when they are incompatible with each other, an adhesive layer capable of bonding the moldings together is placed between them.

Thus, in said first process of the present invention, it is possible to swell the thermoplastic resin molding in the first step by using a mixed solution of the organic solvent (a third component) which increases the extent of swelling of the thermoplastic resin molding so as to reduce the time necessitated for attaining a swelling equilibrium and water (a first component) which makes the swelling effect of the organic solvent (a third component) mild or the alcohol having two or less carbon atoms (a second component) to finally uniformly foam the thermoplastic resin molding in said second step.

In said second process of the present invention, the addition of the alcohol having two or less carbon atoms (a second component) which accelerates the compatibilization of the organic solvent (a third component) with water (a first component) to the organic solvent (a third component) which increases the extent of swelling of the thermoplastic resin molding so as to reduce the time necessitated for attaining a swelling equilibrium and water (a first component) which makes the swelling effect of the organic solvent (a third component) mild makes it possible to make the mixed solution homogeneous, and to swell the thermoplastic resin molding while suitably controlling the extent of swelling, thus finally makes it possible to foam the thermoplastic resin molding uniformly in the second step. Particularly in the second process wherein the mixed solution can be made homogeneous and the volume ratio of water (a first component) to the alcohol (a second component) for obtaining the optimum extent of swelling of the thermoplastic resin molding can be freely controlled, the uniformly foamed molding can be obtained in a short swelling time.

### DESCRIPTION OF THE EMBODIMENT

The following Examples and Comparative Examples will further illustrate the present invention, which by no means limit the invention.

### Examples 1 to 16

A polycarbonate of bisphenol 1,1-bis(4-oxyphenyl)ethane was used in Examples 1 to 15 and a polycapramide (nylon 6) which is a polyamide was used in Example 16 as the starting resin for the thermoplastic resin molding to be used in said first process of the present invention. They were molded into sheets having a thickness of 0.1 mm by the extrusion molding method.

Then a mixed solution comprising the first component and the third component in a mixing ratio (volume %) as shown in each column for each Example in Table 1 was prepared and fed into each vessel. Then test sheets having a size of 30 cm × 30 cm obtained by cutting the above-described two kinds of sheets were immersed in each mixed solution at ordinary temperature under atmospheric pressure until swelling had reached the equilibrium.

The rate of swelling (weight %) of the test sheets thus immersed in the mixed solution was in the range of 15 to 25% by weight in all the cases as shown in the column of swelling rate in Table 1. The swelling rate (%) was determined by dividing the weight increase of the sheet metered after the swelling reached the equilibrium by the original weight of the sheet. The time necessitated for attaining the equilibrium swelling is shown in the column of immersion time in Table 1.

Seven test sheets swollen as described above were prepared for each Example. They were laminated and then pressed with a hot press under heat pressing conditions of a temperature of 140°C and a pressure of 12 MPa for 15 to 20 seconds. Then they were released slowly by increasing an aperture between the upper and lower hot plates of the hot press to 10 mm at a rate of 1 to 1.5 mm/sec and then cooled to obtain a foamed synthetic resin molding in the form of a unified laminate having a thickness of 10 mm.

The manual pressure tests were conducted, wherein the foamed synthetic resin molding obtained as described above was pressed with a finger and the state of the depression thus formed was observed. The results were evaluated according to the following criteria:
good: no depression remained,
relatively good: a shallow depression remained, and
bad: a deep depression remained or the test sample collapsed. The results are shown in the column of "foaming state" in Table 1. The results obtained in all the Examples 1 to 16 were evaluated to be good.

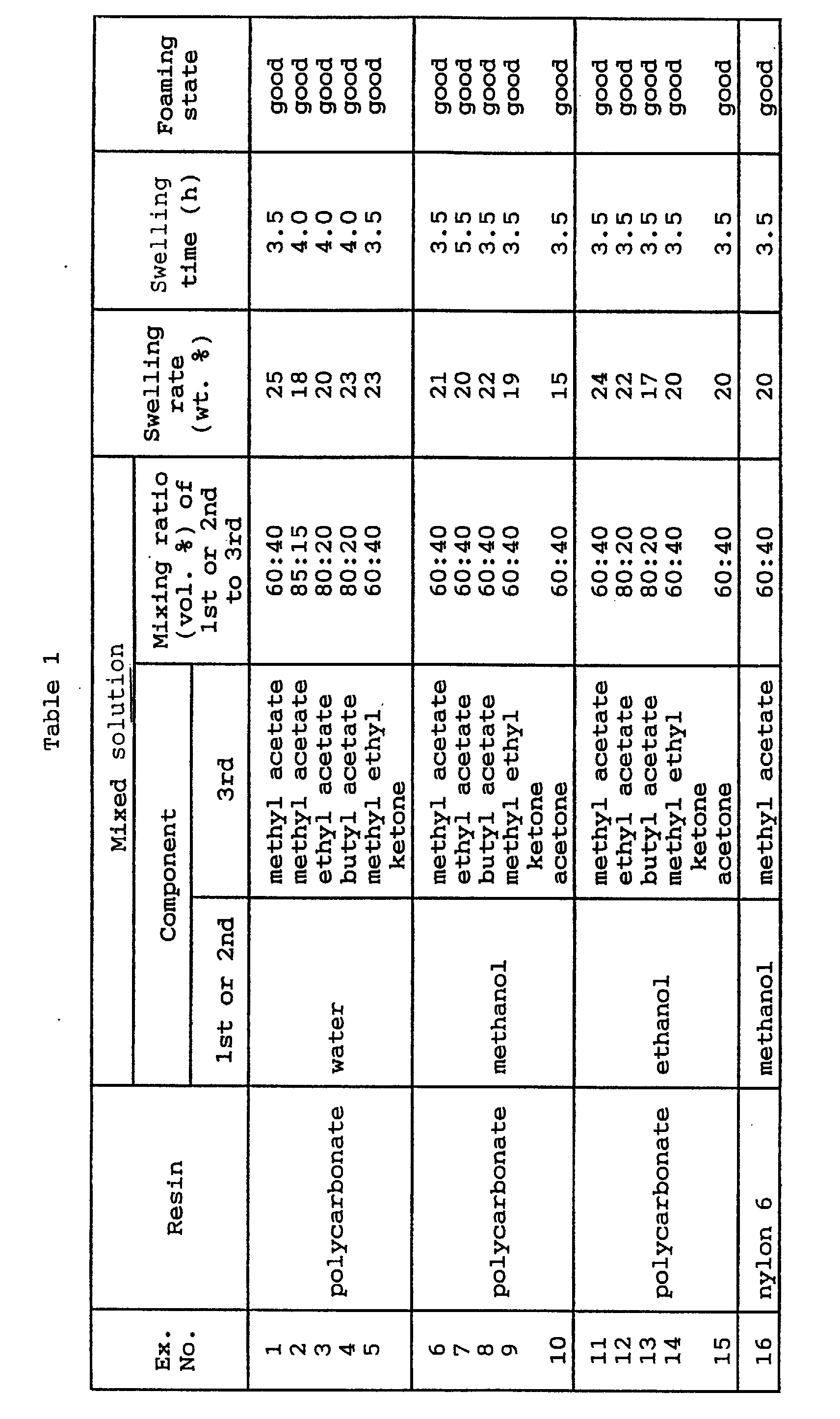

### Comparative Examples 1 to 5

The same polycarbonate sheet having a thickness of 0.1 mm as that used in the above-described Examples 1 to 15 was used as the comparative test sheet of the thermoplastic resin molding. This sheet was cut in the same manner as that of Examples 1 to 15.

Then a mixed solution comprising the first component and the third component in a mixing ratio (volume %) as shown in each column for each Comparative Example in Table 2 was prepared and fed into each vessel. Then the comparative test sheets obtained as described above were immersed in each mixed solution at ordinary temperature under atmospheric pressure until the swelling reached equilibrium. Then the sheets were swollen in the same manner as that of the Examples. The swelling rate (weight %) exceeded 30% by weight in all the Comparative Examples except Comparative Example 2.

The comparative test sheets swollen as described above were pressed in the same manner as that of the Examples to obtain the laminates of the foamed synthetic resin moldings for the comparison tests. The manual pressure tests were conducted in the same manner as that of the Examples. The results of the evaluation were as follows: relatively good in Comparative Example 1, good in Comparative Example 2 and bad in Comparative Examples 3 through 5 as shown in Table 2. However, Comparative Example 2 could not provide an intended foamed molding since the swelling time was very long, the swelling rate was as low as 3% by weight, the foaming was insufficient, and the thickness of the product was as thin as 7 mm.

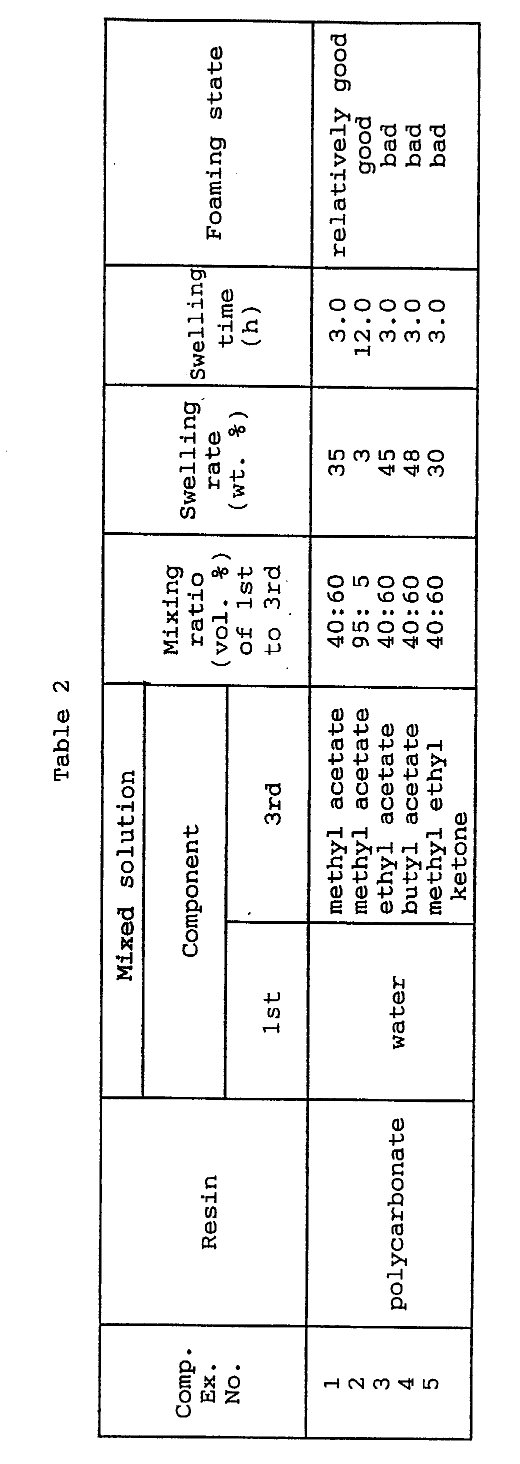

### Examples 17 to 25

In Examples 17 to 24, a polycarbonate of bisphenol 1,1-bis(4-oxyphenyl)ethane was used as the starting resin for the thermoplastic resin molding for the second process of the present invention; and in Example 25, a polycapramide (nylon 6) which is a polyamide was used. They were molded into sheets having a thickness of 0.1 mm by the extrusion method.

Then a mixed solution comprising the first component, the second component and the third component in a mixing ratio (volume %) as shown in each column for each Example in Table 3 was prepared and fed into each vessel. Then the test sheets obtained by cutting the above-described two kinds of sheets into pieces having a size of 30 cm × 30 cm were immersed in each mixed solution at ordinary temperature under atmospheric pressure until the swelling reached equilibrium.

The swelling rate (weight %) of each test sheet thus immersed in the mixed solution was in the range of 12 to 20% by weight as shown in the column of the swelling rate in Table 3. The swelling rate was defined to be basically the same as that of Table 1. In these Examples, the homogeneity of each mixed solution was examined by macroscopically checking whether an interface like an oil/water interface was observed or not. When no interface was observed, the result was represented to be good, and when it was observed, the result was represented to be bad. No interface was observed in all the mixed solutions to mean that the homogeneity was good.

Seven test sheets swollen as described above were prepared for each Example. They were laminated in the same manner as that of Examples 1 to 16 to obtain a foamed synthetic resin molding in the form of a unified laminate having a thickness of 10 mm.

The foaming state of each foamed synthetic resin molding was examined by the same manual pressure tests as those in the above-described Examples to obtain the results given in the column of foaming state in Table 3. The results were evaluated to be good in all the Examples 17 to 25. The swelling time was as short as 120 minutes (2 hours) or less in all the cases.

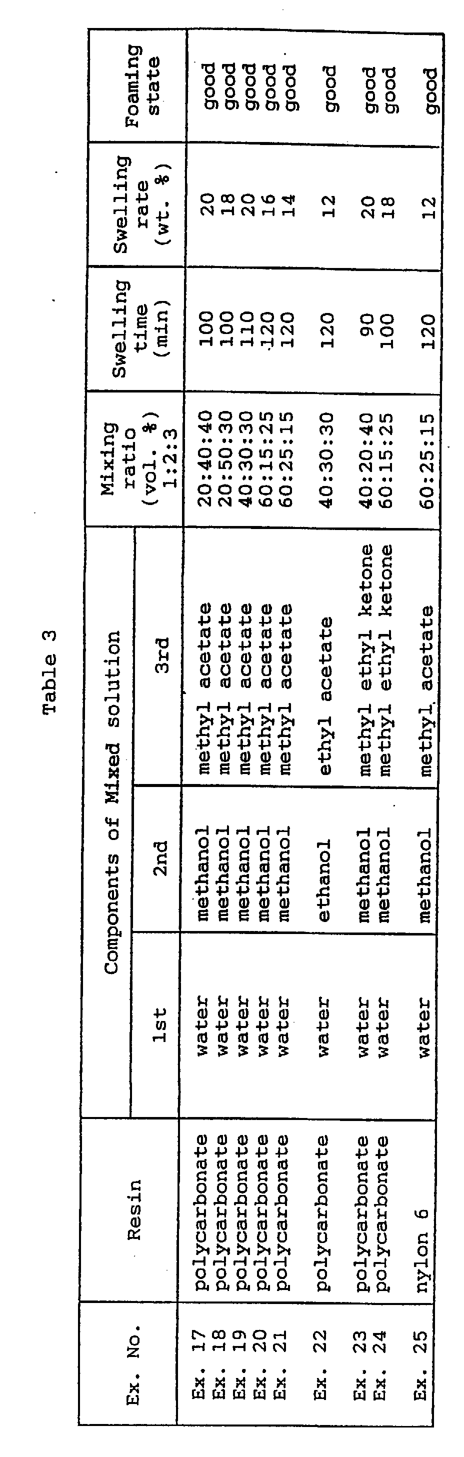

### Comparative Examples 6 to 16

The same polycarbonate sheet having a thickness of 0.1 mm as that used in the above-described Examples 17 to 24 was used as the comparative test sheet of the thermoplastic resin molding. This sheet was cut in the same manner as that of the Examples.

Then, a mixed solution comprising the first component, the second component and the third component in a mixing ratio (volume %) as shown in each column for each Comparative Example in Table 4 was prepared and fed into each vessel. Then the comparative test sheets obtained as described above were immersed in each mixed solution at ordinary temperature under atmospheric pressure until the swelling reached equilibrium. Then the sheets were swollen in the same manner as that of the Examples to obtain the laminate of the foamed synthetic resin moldings for the comparative tests.

The manual pressure tests of the foamed synthetic resin moldings for the comparative test were conducted in the same manner as that of the Examples. The results of the evaluation were as follows: good in Comparative Examples 7, 9, 11, 12, 14 and 15, and bad in Comparative Examples 6, 8, 10, 13 and 16 as shown in Table 4. However, in Comparative Examples 7, 9, 11 and 15, the swelling time was relatively long, i. e. greatly longer than 120 minutes, and in Comparative Examples 11, 12 and 14, the swelling rate was as low as less than 10% by weight and the thickness of the product was as thin as 5 to 7 mm.

As described above, it is understood from the results of Examples and Comparative Examples of the present invention that a suitable swelling rate of the thermoplastic resin molding used for obtaining the intended foamed synthetic resin molding is in the range of about 10% by weight to 25% by weight.

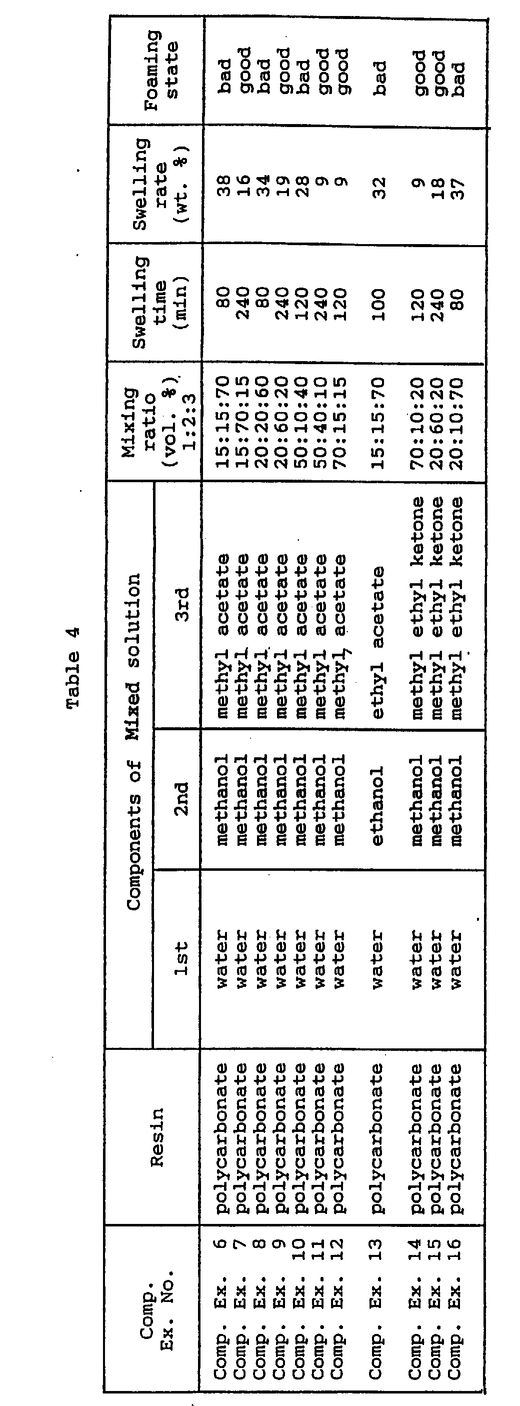

It is to be noted that the words and expressions are used herein only for the explanation but not for the purpose of the limitative understanding, that any equivalents to the characteristic matters shown and described herein are not to be excluded and that various changes and modifications may be made within the claimed scope of the present invention.

## Claims

1. A process for preparing a foamed synthetic resin molding, comprising a first step of bringing a mixed solution composed of water (a first component) or an alcohol having two or less carbon atoms (a second component) and an organic solvent having a boiling point of 50 to 150°C (a third component) into contact with a thermoplastic resin molding under the conditions of ordinary temperature and atmospheric pressure to swell the thermoplastic resin molding; and a second step of heating the thermoplastic resin molding swollen in said first step alone or as laminate of a plurality thereof to a temperature in the range of the heat distortion temperature thereof to the melting point thereof under pressure and then foaming the thermoplastic resin molding while gradually reducing the pressure.

2. The process for preparing a foamed synthetic resin molding as recited in claim 1, wherein the volume ratio of water (the first component) or the alcohol having two or less carbon atoms (the second component) to the organic solvent (the third component) in the mixed solution is 60 to 85 : 15 to 40.

3. A process for preparing a foamed synthetic resin molding, comprising a first step of bringing a mixed solution composed of water (a first component), an alcohol having two or less carbon atoms (a second component) and an organic solvent having a boiling point of 50 to 150°C (a third component) into contact with a thermoplastic resin molding under the conditions of ordinary temperature and atmospheric pressure to swell the thermoplastic resin molding; and asecond step of heating the thermoplastic resin molding swollen in the first step alone or as a laminate of a plurality thereof to a temperature in the range of the heat distortion temperature thereof to the melting point thereof under pressure and then foaming the thermoplastic resin molding while gradually reducing the pressure.

4. The process for preparing a foamed synthetic resin molding as recited in claim 3, wherein the volume ratio of water (the first component) : alcohol having two or less carbon atoms (the second component) : organic solvent (the third component) in the mixed solution is 20 to 60 : 15 to 50 : 15 to 40.

5. A process for preparing a foamed synthetic resin molding as recited in any of claims 1 to 4, the process comprising said first step and second step, wherein another molding is laminated on at least one of the surfaces of the thermoplastic resin molding swollen in the first step, said another molding is an unswollen molding prepared from the same thermoplastic resin as that of said molding or another thermoplastic resin compatible therewith, which is usually in the form of a plate.

6. The process for preparing a foamed synthetic resin molding as recited in claim 5, wherein the another moldings to be laminated on at least one of the surfaces of the swollen thermoplastic resin molding are laminated alternately through an adhesive layer or without the adhesive layer.

7. The process for preparing a foamed synthetic resin molding as recited in any of claims 1 to 6, wherein the thermoplastic resin molding is prepared-from one or a mixture of at least two thermoplastic resin selected from the group consisting of polyvinyl chloride, polypropylene, polystyrene, polycarbonate, polyether imide, polyamide, polymethyl methacrylate, polyether sulfone, polyether ether ketone, ABS, polyethylene terephtalate and polybutylene terephthalate.

8. The process for preparing a foamed synthetic resin molding as recited in any of claims 1 to 7, wherein the organic solvent (the third component) is one or a mixture of at least two solvent selected from the group consigning of methyl acetate, ethyl acetate, butyl acetate, acetone, methyl ethyl ketone, trichloromethane and tetrahydrofurane.

9. The process for preparing a foamed synthetic resin molding as recited in claim 5, wherein the another molding is prepared from one or a mixture of at least two thermoplastic resin selected from the group consisting of polyvinyl chloride, polypropylene, polystyrene, polycarbonate, polyether imide, polyamide, polymethyl methacrylate, polyether sulfone, polyether ether ketone, ABS, polyethylene terephtalate and polybutylene terephthalate.

10. The process for preparing a foamed synthetic resin molding as recited in any of claims 1 to 8, wherein the swelling rate of the thermoplastic resin molding is in the range of about 10 to 25% by weight.
